# EUROPÄISCHE PATENTSCHRIFT

(11) **EP 2 763 884 B1**
(45) Veröffentlichungstag und Bekanntmachung des Hinweises auf die Patenterteilung: **03.05.2017**
(21) Anmeldenummer: 12772065.4
(22) Anmeldetag: 16.08.2012
(51) Int. Cl.: B62D 1/184

(54) **ANORDNUNG MIT EINEM ERSTEN NOCKENTRÄGER**
ASSEMBLY COMPRISING A FIRST CAM CARRIER
DISPOSITIF COMPORTANT UN PREMIER SUPPORT DE CAMES

(30) Priorität: 05.10.2011 DE 102011054196
(43) Veröffentlichungstag der Anmeldung: 13.08.2014
(73) Patentinhaber: ThyssenKrupp Presta Aktiengesellschaft, 9492 Eschen (LI)
(72) Erfinder: HAHN, Michael, CH-9434 Au (SG) (CH); FLEISCHER, Martin, CH-9436 Balgach (CH)
(74) Vertreter: Fechner, Thomas
(86) Internationale Anmeldenummer: PCT/EP2012/003485
(87) Internationale Veröffentlichungsnummer: WO 2013/050095

(56) Entgegenhaltungen:
- EP-A2- 1 180 466
- WO-A1-2009/141045
- JP-A- 2006 131 211

## Beschreibung

Die vorliegende Erfindung betrifft eine Anordnung mit einem ersten Nockenträger und zumindest einem weiteren Nockenträger für eine Feststelleinrichtung für eine verstellbare Lenksäule eines Kraftfahrzeugs, wobei die Nockenträgerjeweils zumindest einen Nocken aufweisen und die Nockenträger einander gegenüberliegend um eine Drehachse gegeneinander verdrehbar angeordnet sind und beim Verdrehen des ersten Nockenträgers gegen den weiteren Nockenträger entlang eines Verdrehwinkels um die Drehachse der Nocken des ersten Nockenträgers am Nocken des weiteren Nockenträgers auf einer Kontaktspur entlang gleitend anliegt.

Gattungsgemäße Anordnungen, wie sie z.B. in der WO 2009/141045 A1 gezeigt sind, werden in Feststelleinrichtungen bzw. Spanneinrichtungen für verstellbare Lenksäulen für Kraftfahrzeuge eingesetzt. Mittels eines meist von Hand bedienbaren Hebels können die Nockenträger gegeneinander verdreht werden. In einer ersten Stellung befindet sich dann die Feststelleinrichtung in einer geöffneten Stellung, in der die Lenkspindel und damit das an der Lenksäule angebrachte Lenkrad in Höhenund/oder Längsrichtung verstellt werden kann, um die Lage des Lenkrades an die Position des jeweiligen Fahrers anzupassen. Beim Stand der Technik sind unterschiedliche Nockenträger bekannt, bei denen die Nocken unterschiedlich ausgeformt sind, also eine voneinander verschiedene Nockenkontur aufweisen. Häufig wird auch von einem Nocken bzw. Nockenträger und mit diesem zusammenwirkenden Nockenfolger gesprochen. Dies ist aber lediglich eine sprachliche Konvention. Letztendlich handelt es sich bei Nockenträger und Nockenfolger jeweils um Nockenträger mit entsprechenden Nocken.

Ein generelles Problem bei der Darstellung bzw. Ausformung der Nocken besteht darin, auf einem möglichst kurzen Verstellweg bzw. Verdrehwinkel, eine möglichst große Presskraft zur Arretierung der Feststelleinrichtung in ihrer Schließstellung bereitzustellen. Gleichzeitig soll die Handkraft, die zur Betätigung des Hebels der Feststelleinrichtung erforderlich ist, auf einem möglichst niedrigen Niveau gehalten werden und ein angenehmes Betätigungsgefühl vermitteln. Weiterhin soll der Verschleiß am Nocken möglichst gering gehalten werden.

Die EP 1 180 466 schlägt zur Verbesserung der Bedienbarkeit vor, die Nockenoberfläche mit einer Vielzahl von Anstiegsrampen auszubilden, deren Anstiege unterschiedlich sind, um einen möglichst gleichmäßigen Übergang der Handkraft in Abhängigkeit vom Verdrehwinkel und damit von der Spannkraft zu erreichen. Im Stand der Technik sind darüber hinaus allgemein kurvenförmige Anstiegsrampen bekannt, so beispielsweise in der JP 2003-231470 A. In der JP 2005-231545 A ist ebenfalls eine Nockenrampe dargestellt.

Gemäß der JP 2006-131211 A soll die spezifisch erforderliche Spannkraft mit einem optimierten Handkraftverlauf dargestellt werden. Hierzu schlägt die JP 2006-131211 A vor, die Kontaktflächen zwischen Nocken und Nockenfolger, die im geschlossenen Zustand des Klemmsystems miteinander in Eingriff stehen, derart auszubilden, dass der Spannungsverlauf in der Kontaktfläche entlang einer Linie, die vom Drehzentrum bzw. der Drehachse des Nockenträgers sich nach außen hin erstreckt, möglichst gleichmäßig ist. Hierzu wird der Nockenkontakt zunächst vom radial äußeren Ende her geschlossen. Die elastischen Deformationen im Nocken sind laut dieser Schrift entsprechend größer, als die im Betrieb erwarteten thermischen Ausdehnungen der Bauteile. Aufgrund der von vornherein erwarteten elastischen Deformation und der nur sehr geringen Werte der Überhöhung stellt diese technische Lösung sehr hohe Anforderungen an die Genauigkeit der einzelnen Bauteile und damit an die Fertigungstoleranzen. Weiterhin ist die Dauerhaltbarkeit von Nockenträger und Nocken nur mit hohem Aufwand erreichbar, da gezielt elastische Verformungen vorgesehen sind, um den gleichmäßigen Kraftverlauf zu erreichen.

Allen oben genannten Techniken des Standes der Technik ist gemein, dass der Handkraftverlauf nur sehr eingeschränkt optimiert werden kann.

Aufgabe der Erfindung ist es daher, eine gattungsgemäße Anordnung zur Verfügung zu stellen, bei der der Kraftverlauf beim gegeneinander Verdrehen der Nockenträger um die Drehachse optimal an die Bedürfnisse angepasst werden kann.

Dies wird erfindungsgemäß durch eine Anordnung gemäß Patentanspruch 1 erreicht.

Es ist somit vorgesehen, dass die Kontaktspur in einem sich in Abhängigkeit des Verdrehwinkels ändernden radialen Abstand von der Drehachse verläuft.

Die Kontaktspur und die Nockengeometrien und Kontakte lassen sich vorteilhafterweise in Polarkoordinaten mit dem Verdrehwinkel und dem Abstand in der radialen Richtung von der Drehachse beschreiben.

Mit anderen Worten ist es somit ein Grundgedanke der Erfindung, in radialer Richtung gesehen, den Abstand des Kontaktes zwischen den beiden Nocken also der Kontaktspur vom Drehzentrum bzw. von der Drehachse über den Verlauf der Kontaktspur variabel zu gestalten. Insbesondere kann dabei vorgesehen sein, dass der radiale Abstand der Kontaktspur über den gesamten Verdrehwinkel entweder permanent zunimmt oder permanent abnimmt, um beim Verdrehen der Nockenträger der Anordnung gegeneinander beim Schließ- und/oder Öffnungsvorgang der Feststelleinrichtung den gewünschten Kraftverlauf zu erreichen.

Als Kontaktspur ist der Bereich eines Nockenträgers bzw. Nockens zu verstehen, der im Verlauf der Betätigung der Feststelleinrichtung mit dem anderen Nockenträger bzw. Nocken in Kontakt steht, wobei über diesen Kontakt die Spannkraft der Feststelleinrichtung übertragen wird, beziehungsweise die Nockensteuerung der Feststelleinrichtung erfolgt.

Die Kontaktspur kann sich, im Sinne einer eine Längserstreckung bzw. einen Verlauf aufweisenden Spur, auf beiden der aneinander entlang gleitenden Nocken oder nur auf einem dieser beiden Nocken ausbilden. Günstig ist es jedenfalls, wenn der Nocken des ersten Nockenträgers und der Nocken des weiteren Nockenträgers ausschließlich im Bereich der Kontaktspur miteinander in Kontakt stehen. Unter in Kontakt stehen, wird dabei ein in physischem Kontakt stehen, also ein aneinander anliegen verstanden. Die Kontaktspur kann je nach Ausformung der miteinander in Kontakt stehenden Nocken linienförmig ausgebildet sein, oder aber auch in radialer Richtung bezüglich der Drehachse gesehen eine gewisse Breite aufweisen. Weist die Kontaktspur eine über eine Linie hinausgehende Breite auf, so ist zur Feststellung der Änderung des radialen Abstandes der Kontaktspur von der Drehachse in Abhängigkeit des Verdrehwinkels die in radialer Richtung gesehene Mitte der Kontaktspur heranzuziehen. Mit anderen Worten ist somit im Zweifel der radiale Abstand der Kontaktspur zur Drehachse zwischen der in radialer Richtung gesehenen Mitte der Kontaktspur und der Drehachse zu messen. Um bei einer langfristigen Verwendung der erfindungsgemäßen Anordnung den Abrieb an den aneinander entlang gleitenden Nocken möglichst gering zu halten, sehen bevorzugte Ausgestaltungsformen der Erfindung vor, dass sich, in radialer Richtung bezüglich der Drehachse gesehen, die Breite der Kontaktspur in Abhängigkeit des Verdrehwinkels ändert. In Bereichen, in denen der Verschleiß bzw. der Abrieb besonders hoch ist, kann so der vorzeitigen Abnutzung der Nocken durch eine entsprechend größere Breite der Kontaktspur entgegengewirkt werden. Die Kontaktspur ist zumindest bei einem Nockenträger bzw. Nocken, nach mehrmaligem Gebrauch der Feststelleinrichtung, als Schleifspur erkennbar.

Besonders bevorzugt ist vorgesehen, dass die aneinander gleitenden Nocken, wenn sie miteinander in Kontakt stehen, zumindest abschnittsweise vollflächig oder voll linienförmig und nicht nur punktuell, aufeinander aufliegen. In diesem Sinne kann es besonders günstig sein, wenn, auch wenn sich die Nocken in einem entlasteten Zustand befinden, die Kontaktspur, vorzugsweise über ihre gesamte Längserstreckung, auf einem der Nocken, in einem ebenen Schnitt entlang der Drehachse gesehen, parallel zur Kontaktspur auf dem anderen Nocken verläuft. In solchen Ausgestaltungsformen liegen die Nocken auch dann vollflächig oder voll linienförmig aneinander an, auch dann wenn sie nur mit geringen Kräften aneinander gedrückt werden bzw. nur locker aneinander anliegen würden.

In diesem Zusammenhang ist es auch günstig, wenn die Kontaktspur, vorzugsweise über ihre gesamte Längserstreckung, auf zumindest einem der, vorzugsweise auf beiden miteinander in Kontakt stehenden, Nocken in einem ebenen Schnitt entlang der Drehachse gesehen, orthogonal zur Drehachse verläuft bzw. ausgerichtet ist. Die Nocken sind bevorzugt auf den jeweiligen Nockenträgern als einander zugewandte und in Richtung parallel zur Drehachse ausgebildete Vorsprünge des jeweiligen Nockenträgers ausgebildet. Mit anderen Worten handelt es sich bei den Nocken also um eine Art Gebirge, die über die sonstige Kontur des Nockenträgers in Richtung parallel zur Drehachse überstehen. Die Vorsprünge bzw. Nocken können einstückig mit den Nockenträgern ausgeformt sein. Es kann sich aber auch um Nocken handeln, die auf einem Nockenträgergrundkörper mittels Verschrauben, Annieten, Anschweißen, Verpressen oder dergleichen nachträglich befestigt werden.

Der Vollständigkeit halber wird darauf hingewiesen, dass günstigerweise vorgesehen ist, dass die Kontaktspur, vorzugsweise jeweils, auf der, dem Nocken des anderen Nockenträgers zugewandten Oberfläche zumindest eines der Nocken angeordnet ist. Es ist denkbar und möglich, an beiden Nocken eine Kontaktspur auszubilden. Um den radialen Abstand der Kontaktspur erfindungsgemäß in Abhängigkeit des Verdrehwinkels zu ändern, können in zumindest einem der Nocken bzw. dessen Oberfläche Taschen eingearbeitet sein. Diese Taschen können auch als Vertiefungen oder Ausnehmungen bezeichnet werden. Durch die Einbringung von Taschen wird der Kontakt zwischen den beiden Nocken im Bereich der Taschen verhindert.

Mit besonderem Vorteil ist vorgesehen, dass der radiale Abstand der Kontaktspur von der Drehachse an einem Ende der Kontaktspur minimal ist. Günstigerweise liegen die Nocken dann an diesem Ende dieser Kontaktspur aneinander an, wenn sich die Feststelleinrichtung in ihrer Schließstellung befindet, in der die verstellbare Lenksäule bzw. das daran angebrachte Lenkrad in seiner Position arretiert ist. In diesem Bereich ist bereits die volle Klemmkraft aufgebracht worden und es erfolgt nur deshalb eine weitere Verdrehung des von Hand bedienbaren Hebels bzw. Klemmhebels, um die Lage des Klemmhebels in der Endposition besser zu sichern. Durch diese Maßnahme wird es möglich, den Fahrer in diesem letzten Bereich ein Gefühl des "Einrastens" zu vermitteln. Bei diesem "Einrasten" erfolgt jedoch kein Abbau der Spannkraft in der Feststelleinrichtung. Dieses Gefühl des "Einrastens" ist auch dann gegeben, wenn in Wahrheit die Betätigungskraft am von Hand betätigbaren Hebel nicht absinkt, sondern nur gleich bleibt, da kurz vor diesem Übergang die Spannkraft sehr stark angestiegen ist.

Zusätzlich zur oben genannten Anordnung betrifft die Erfindung auch eine Feststelleinrichtung für eine verstellbare Lenksäule eines Kraftfahrzeugs mit einer erfindungsgemäßen Anordnung. Bei dieser kann vorgesehen sein, dass die Nockenträger um die Drehachse gegeneinander verdrehbar auf einem Spannbolzen der Feststelleinrichtung angeordnet sind. In solchen Ausgestaltungsformen ist besonders bevorzugt vorgesehen, dass der Spannbolzen die Nockenträger koaxial zur Drehachse durchdringt. Es kann vorgesehen sein, dass einer der Nockenträger oder Nocken, auch Nockenfolger genannt, drehfest mit dem Spannbolzen verbunden ist. Der weitere bzw. zusätzliche Nockenträger kann dann z.B. an einem an der restlichen Feststelleinrichtung fixierten z.B. fahrzeugfesten Bauteil fixiert sein.

Günstigerweise weist die Feststelleinrichtung einen von Hand bedienbaren Hebel auf. Der Hebel kann z.B. über den Spannbolzen drehfest mit einem der Nockenträger verbunden sein.

Alternativ ist es auch denkbar und möglich, einen der Nockenträger, oder Nocken, mit dem Hebel zumindest drehfest zu verbinden und drehbar um die Achse des Spannbolzens auf den Spannbolzen zu lagern. Entscheidend ist allein, dass der Nocken gegenüber dem Nockenfolger (oder mit anderen Worten die beiden Nocken zueinander) verdrehbar ansteuerbar ist.

Der Vollständigkeit halber wird aber darauf hingewiesen, dass die Erfindung nicht nur bei von Hand über einen Hebel bedienbaren Feststelleinrichtungen sondern auch bei motorisch betriebenen Feststelleinrichtungen, bei denen die Nockenträger mittels eines Motors gegeneinander verdreht werden, eingesetzt werden kann.

Neben der Anordnung der Feststelleinrichtung betrifft die Erfindung auch eine verstellbare Lenksäule für ein Kraftfahrzeug mit einer erfindungsgemäßen Feststelleinrichtung. Unter einer verstellbaren Lenksäule, insbesondere auch in einer in ihrer Höhe und Länge verstellbaren Lenksäule, wird allgemein eine beim Stand der Technik an sich bekannte Lenksäule verstanden, bei der die Position des an der Lenksäule bzw. dessen Lenkspindel angebrachten Lenkrades an den jeweiligen Fahrer angepasst werden kann. Die Anpassung bzw. Verstellung der Lenksäule erfolgt dann in der Regel bei geöffneter Feststelleinrichtung. Ist die Feststelleinrichtung in ihre Schließstellung gebracht, so ist die Position der Lenksäule bzw. deren Lenkspindel und damit des Lenkrades fixiert. In solchen erfindungsgemäßen Lenksäulen können die beim Stand der Technik an sich bekannten Energieabsorptionsmechanismen für den Crashfall integriert sein.

Weitere Merkmale und Einzelheiten bevorzugter Ausgestaltungsformen der Erfindung werden anhand der nachfolgenden Figurenbeschreibung erläutert. Es zeigen:
Fig. 1 eine erfindungsgemäß ausgerüstete verstellbare Lenksäule für ein Kraftfahrzeug;
Fig. 2 den in Fig. 1 zum Einsatz kommende erste Nockenträger;
Fig. 3 bis 6 den in Fig. 1 zum Einsatz kommende weiteren bzw. zusätzlichen Nockenträger in verschiedenen Ansichten;
Fig. 7 eine alternative Ausgestaltungsform eines erfindungsgemäßen weiteren Nockenträgers;
Fig. 8 bis 10 verschiedene Stellungen der Nockenträger relativ zueinander bei verschiedenen Verdrehwinkeln;
Fig. 11 einen schematisierten Längsschnitt entlang der Drehachse durch die Nockenträger und den Spannbolzen.

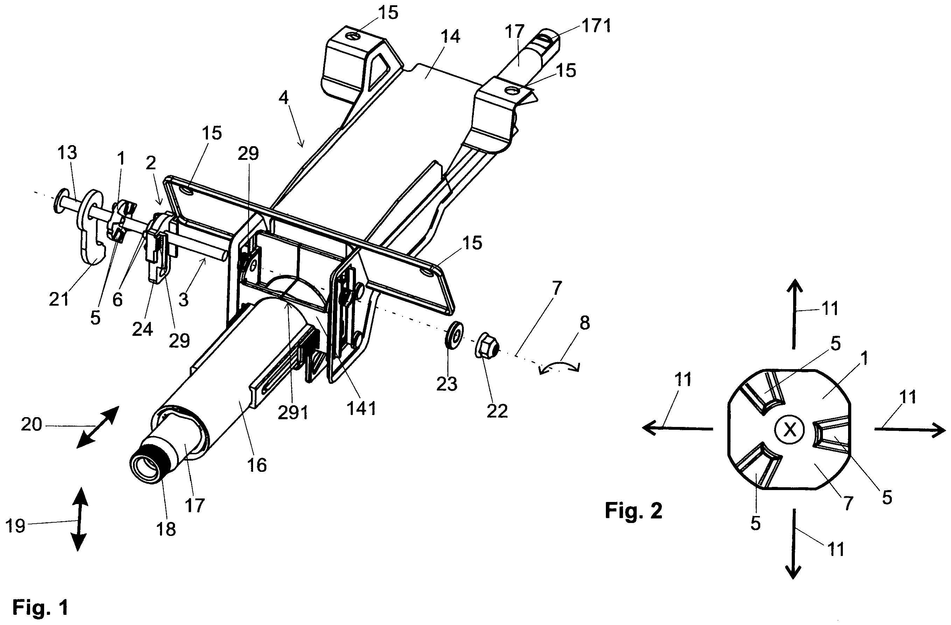

In Fig. 1 ist eine erfindungsgemäß ausgebildete verstellbare Lenksäule dargestellt, wobei zunächst die beim Stand der Technik an sich bekannten Merkmale dieser Lenksäule 4 kurz geschildert werden, ohne dass dies bedeutet, dass bei erfindungsgemäßen Lenksäulen 4 diese beim Stand der Technik an sich bekannten Merkmale realisiert sein müssen.

Im in Fig. 1 dargestellten Ausführungsbeispiel weist die verstellbare Lenksäule 4 eine Trageinheit 14 auf, welche mittels der Befestigungslaschen 15 an der Karosserie eines Fahrzeugs befestigt wird. An der Trageinheit 14 ist, gegebenenfalls über einen entsprechenden, an sich bekannten Zwischenhebel eine Lenkspindellagereinheit 16 verstellbar gelagert. Zur Verstellung muss zunächst die Feststelleinrichtung 3 in ihre geöffnete Position gebracht werden. In dieser geöffneten Stellung der Feststelleinrichtung 3 kann die Lenkspindellagereinheit 16 samt Lenkspindel 17 in Längen- und/oder Höhenrichtung verstellt werden. Im gezeigten Ausführungsbeispiel sind beide Verstellrichtungen möglich. Doppelpfeil 19 zeigt die möglichen Richtungen bei der Höhenverstellung. Doppelpfeil 20 zeigt die Richtungen bei der Längsverstellung. Am Lenkradanschluss 18 kann das hier nicht dargestellte Lenkrad an der Lenkspindel 17 befestigt werden. Am vorderen Ende 171 der Lenkspindel kann ein Universalgelenk oder ein Lenkgetriebe, beispielsweise mit elektrischer Hilfskraftunterstützung, bekannt unter dem Namen "Colpas", angeordnet sein.

Ist die gewünschte Verstellung der Position der Lenkspindellagereinheit 16 und damit des Lenkrades durchgeführt worden, so wird die hier in einer Explosionsdarstellung gezeigte Feststelleinrichtung 3 wieder in ihre Schließstellung gebracht, in der die Position der Lenkspindellagereinheit 16 relativ zur Trageinheit 14 und damit zur Karosserie des Fahrzeugs fixiert ist.

Im gezeigten Ausführungsbeispiel wird die Feststelleinrichtung 3 mittels eines hier nur verkürzt dargestellten Hebels 21 zwischen seiner geöffneten Stellung und seiner Schließstellung verstellt. Der Hebel 21 ist im gezeigten Ausführungsbeispiel zusammen mit einem der Nockenträger 1 oder 2, hier zusammen mit dem Nockenträger 1, um die, in diesem Ausführungsbeispiel koaxial durch den Spannbolzen 13 verlaufende Drehachse 7 verdrehbar. Der weitere Nockenträger 2 ist in diesem Ausführungsbeispiel über das Zwischenteil 24 drehfest an der Trageinheit 14 befestigt. Durch Verdrehen des Hebels 21 mitsamt des ersten Nockenträgers 1 werden der Nockenträger 1 und der weitere Nockenträger 2 relativ zueinander um die Drehachse 7 über einen entsprechend vorgegebenen Verdrehwinkel 8 gegeneinander verdreht. Der Spannbolzen 13 dieses Ausführungsbeispiels ist auf der dem Hebel 21 gegenüberliegenden Seite mittels Beilagscheibe 23 und Gegenmutter 22 gesichert. Die Beilagsscheibe kann auch durch ein Axiallager ersetzt sein. Der erste Nockenträger 1 weist in diesem Ausführungsbeispiel einstückig angeformte Nocken 5 und der weitere Nockenträger 2 ebenfalls einstückig angeformte Nocken 6 auf. Die Nockenträger 1 und 2 sind einander gegenüberliegend um die Drehachse 7 gegeneinander verdrehbar angeordnet. Beim Verdrehen des ersten Nockenträgers 1 gegen den weiteren Nockenträger 2 entlang des Verdrehwinkels 8 um die Drehachse 7 liegen die Nocken 5 des ersten Nockenträgers 1 an jeweils einem der Nocken 6 des weiteren Nockenträgers 2 auf einer Kontaktspur 9 aneinander entlang gleitend an. Der Vollständigkeit halber wird darauf hingewiesen, dass die Anzahl der auf einem jeweiligen Nockenträger 1 oder 2 angeordneten Nocken 5 bzw. 6 variieren kann. Das Minimum ist jeweils ein einzelner Nocken 5 bzw. 6 pro Nockenträger 1 oder 2. Im gezeigten Ausführungsbeispiel weisen die Nockenträger 1 und 2 jeweils drei Nocken 5 bzw. 6 auf. Die Zahl der Nocken pro Nockenträger kann aber, wie gesagt, variieren. Günstig ist es jedenfalls, wenn jeweils ein Nocken 5 des ersten Nockenträgers 1 mit einem Nocken 6 des weiteren Nockenträgers 2 zusammenwirkt.

Der Vollständigkeit halber wird darauf hingewiesen, dass erfindungsgemäße Anordnungen von Nockenträgern 1 und 2 sowohl bei reibschlüssig als auch bei formschlüssig arbeitenden Feststelleinrichtungen 3 eingesetzt werden können. Im gezeigten Ausführungsbeispiel ist an den Verzahnungen 29 zu erkennen, dass es sich hier in Bezug auf die Höhenverstellung in Richtung des Doppelpfeils 19 um eine formschlüssig arbeitende Feststelleinrichtung 3 handelt, und in Längenverstellrichtung in Richtung des Doppelpfeils 20 um eine reibschlüssige Verbindung, entlang der Kontaktflächen 291 zwischen dem Zwischenhebel 141 und der Lenkspindellagereinheit 16, handelt.

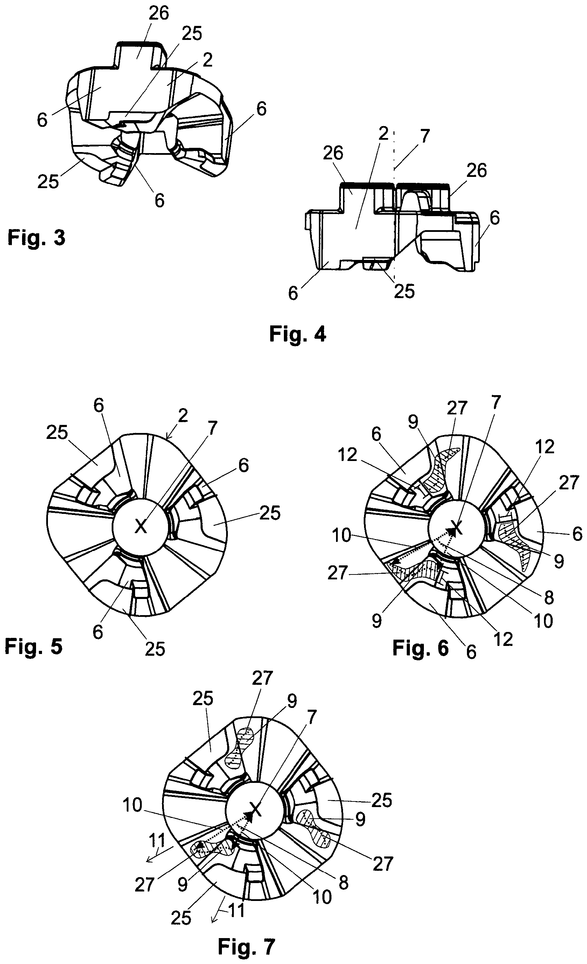

Fig. 2 zeigt eine Draufsicht auf die Nocken 5 des ersten Nockenträgers 1. Eingezeichnet ist auch die Drehachse 7, um die die Nockenträger 1 und 2 gegeneinander durch die Betätigung des Handbedienhebels 21 verdreht werden, sowie die radiale Richtung 11. Die Fig. 3 bis 6 zeigen das Gegenstück, also den weiteren Nockenträger 2 mit seinen Nocken 6. Auf der den Nocken 6 gegenüberliegenden Rückseite des weiteren Nockenträgers 2 sind im gezeigten Ausführungsbeispiel zwei Fixierungszapfen 26 vorgesehen, welche als Verdrehsicherung im gezeigten Ausführungsbeispiel in entsprechende Ausnehmungen im Zwischenteil 24 eingreifen. Um in Zusammenwirkung mit den Nocken 5 des ersten Nockenträgers 1, den erfindungsgemäß variierenden radialen Abstand 10 der Kontaktspur 9 von der Drehachse 7 in Abhängigkeit des Verdrehwinkels 8 zu realisieren, sind im gezeigten Ausführungsbeispiel Taschen bzw. Vertiefungen 25 in den Nocken 6 bzw. in deren Oberflächen vorgesehen.

Fig. 6 zeigt eine Draufsicht auf die Nocken 6 bzw. deren Oberflächen. In dieser Draufsicht sind auch die Kontaktspuren 9 eingezeichnet. In dieser Draufsicht gemäß Fig. 6 ist gut der sich über den Verlauf des Verdrehwinkels 8 ändernde radiale Abstand 10 zwischen der Kontaktspur 9 und der Drehachse 7 zu sehen. Bei der dargestellten Variante weisen die Kontaktspuren 9 eine über eine Linienform hinausgehende Breite 12 auf, welche in diesem Ausführungsbeispiel ebenfalls über die Längserstreckung der Kontaktspur 9 hinweg variiert.

In solchen Fällen, in denen die Breite 12 der Kontaktspur 9 in radialer Richtung 11 nicht zu vernachlässigen ist, wird der Abstand 10 zwischen Kontaktspur 9 und Drehachse 7 mit Hilfe der bezogen auf die radiale Richtung 11 bestimmten Mittellinie 27 der Kontaktspur 9 bestimmt. Dies ist beispielhaft in Fig. 6 und 7 auch so eingezeichnet. Während in Fig. 6 die Mittellinie 27 und damit auch die schraffiert eingezeichnete Kontaktspur 9 relativ eckig verläuft, ist in Fig. 7 eine zweite Variante dargestellt, bei der die Änderungen des radialen Abstandes 10 in verschiedenen Radien gezielt abgerundet sind. Darüber hinaus ist es natürlich auch denkbar und möglich, andere Verläufe von Kontaktspuren 9 zu realisieren, zum Beispiel um im Bereich des größten Anstiegs der Nockenrampe eine Abschwächung der am Hebel 21 benötigten Kraft zu erreichen. Die Auslegung sollte dabei in Abhängigkeit von den Werkstoffeigenschaften der Nocken 5 und 6 bzw. deren Nockenträger 1 und 2 erfolgen. Die jeweiligen Flächenpressungen sollten so bemessen sein, dass die Nockenpaarungen dauerhaft haltbar sind.

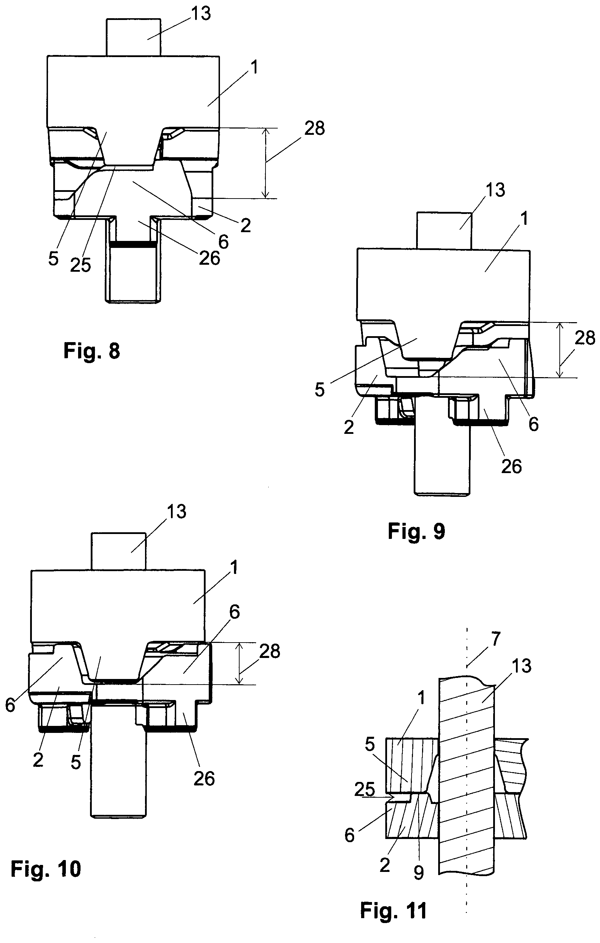

In den Fig. 8 bis 10 sind Seitenansichten auf die einander gegenüberliegend angeordneten Nockenträger 1 und 2 und den durch sie zentral hindurchgeführten Spannbolzen 13 dargestellt, wobei die beiden Nockenträger 1 und 2 und damit auch ihre Nocken 5 und 6 in den verschiedenen Darstellungen der Fig. 8, 9 und 10 in relativ zueinander verschiedenen Verdrehwinkeln 8 angeordnet sind. Entsprechend variiert auch die Distanz 28 zwischen den beiden Nockenträgern 1 und 2. Die Situation gemäß Fig. 8 entspricht der Schließstellung der Feststelleinrichtung 3 in der die Lenkspindellagereinheit 16 relativ zur Trageinheit 14 in ihrer Position fixiert ist. Fig. 10 zeigt die geöffnete Stellung der Feststelleinrichtung 3, bei der eine Verstellung der Lenkspindellagereinheit 16 in zumindest einer der Richtungen 19 und 20 relativ zur Trageinheit 14 möglich ist. Fig. 9 zeigt eine Zwischenstellung.

Fig. 11 zeigt einen ebenen Schnitt entlang der Drehachse 7 durch die Anordnung aus den beiden Nockenträgern 2 und dem Spannbolzen 13. Gut zu sehen ist hier, dass vorzugsweise die Kontaktspur 9 auf einem der Nocken 5 parallel zur Kontaktspur 9 auf dem anderen Nocken 6 verläuft. Weiters ist auch zu sehen, dass, in diesem Schnitt gesehen, die Kontaktspur orthogonal zur Drehachse 7 verläuft, wie dies bei bevorzugten Ausgestaltungsformen der Fall ist. In Fig. 11 ist der belastete Zustand gezeigt, bei dem das Klemmsystem sich in seiner Schließstellung befindet. Der parallele Verlauf der Kontaktspur 9 auf den beiden Nocken 5 und 6 ist aber günstigerweise auch im entlasteten Zustand gegeben, was insgesamt zu einem permanent vollflächigen Aufliegen der beiden Nocken 5 und 6 im Bereich der Kontaktspur 9 führt, wenn die Nocken 5 und 6 in Kontakt miteinander stehen.

### Legende

### zu den Hinweisziffern:

| | | | |
|---|---|---|---|
| 1 | erster Nockenträger | 171 | Ende |
| 2 | weiterer Nockenträger | 291 | Kontaktfläche |
| 3 | Feststelleinrichtung | | |
| 4 | Lenksäule | | |
| 5 | Nocken | | |
| 6 | Nocken | | |
| 7 | Drehachse | | |
| 8 | Verdrehwinkel | | |
| 9 | Kontaktspur | | |
| 10 | radialer Abstand | | |
| 11 | radiale Richtung | | |
| 12 | Breite | | |
| 13 | Spannbolzen | | |
| 14 | Trageinheit | | |
| 15 | Befestigungslaschen | | |
| 16 | Lenkspindellagereinheit | | |
| 17 | Lenkspindel | | |
| 18 | Lenkradanschluss | | |
| 19 | Richtung | | |
| 20 | Richtung | | |
| 21 | Handbedienhebel | | |
| 22 | Gegenmutter | | |
| 23 | Beilagscheibe | | |
| 24 | Zwischenteil | | |
| 25 | Tasche bzw. Ausnehmung bzw. Vertiefung | | |
| 26 | Fixierungszapfen | | |
| 27 | Mittellinie | | |
| 28 | Distanz | | |
| 29 | Verzahnung | | |
| 141 | Zwischenhebel | | |

## Patentansprüche

1. Anordnung mit einem ersten Nockenträger (1) und zumindest einem weiteren Nockenträger (2) für eine Feststelleinrichtung (3) für eine verstellbare Lenksäule (4) eines Kraftfahrzeugs, wobei die Nockenträger (1, 2) jeweils zumindest einen Nocken (5, 6) aufweisen und die Nockenträger (1, 2) einander gegenüberliegend um eine Drehachse (7) gegeneinander verdrehbar angeordnet sind und beim Verdrehen des ersten Nockenträgers (1) gegen den weiteren Nockenträger (2) entlang eines Verdrehwinkels (8) um die Drehachse (7) der Nocken (5) des ersten Nockenträgers (1) am Nocken (6) des weiteren Nockenträgers (2) auf einer Kontaktspur (9) entlang gleitend anliegt, **dadurch gekennzeichnet, dass** die Kontaktspur (9) in einem sich in Abhängigkeit des Verdrehwinkels (8) ändernden radialen Abstand (10) von der Drehachse (7) verläuft.

2. Anordnung nach Anspruch 1, **dadurch gekennzeichnet, dass** der Nocken (5) des ersten Nockenträgers (1) und der Nocken (6) des weiteren Nockenträgers (2) ausschließlich im Bereich der Kontaktspur (9) miteinander in Kontakt stehen.

3. Anordnung nach Anspruch 1 oder 2, **dadurch gekennzeichnet, dass** sich, in radialer Richtung (11) bezüglich der Drehachse (7) gesehen, die Breite (12) der Kontaktspur (9) in Abhängigkeit des Verdrehwinkels (8) ändert.

4. Anordnung nach einem der Ansprüche 1 bis 3, **dadurch gekennzeichnet, dass**, auch wenn sich die Nocken (5, 6) in einem entlasteten Zustand befinden, die Kontaktspur (9), vorzugsweise über ihre gesamte Längserstreckung, auf einem der Nocken (5), in einem ebenen Schnitt entlang der Drehachse (7) gesehen, parallel zur Kontaktspur (9) auf dem anderen Nocken (6) verläuft.

5. Anordnung nach einem der Ansprüche 1 bis 4, **dadurch gekennzeichnet, dass** die Kontaktspur (9), vorzugsweise über ihre gesamte Längserstreckung, auf zumindest einem der, vorzugsweise auf beiden miteinander in Kontakt stehenden, Nocken (5, 6) in einem ebenen Schnitt entlang der Drehachse (7) gesehen, orthogonal zur Drehachse (7) verläuft.

6. Anordnung nach einem der Ansprüche 1 bis 5, **dadurch gekennzeichnet, dass** die Nocken (5, 6) auf den jeweiligen Nockenträgern (1, 2) als einander zugewandte und in Richtung parallel zur Drehachse (7) ausgebildete Vorsprünge des jeweiligen Nockenträgers (1, 2) ausgebildet sind.

7. Anordnung nach Anspruch 6, **dadurch gekennzeichnet, dass** die Kontaktspur (9), vorzugsweise jeweils, auf der, dem Nocken (5, 6) des anderen Nockenträgers (1, 2) zugewandten Oberfläche zumindest eines der Nocken (5, 6) angeordnet ist.

8. Feststelleinrichtung (3) für eine verstellbare Lenksäule (4) eines Kraftfahrzeugs mit einer Anordnung nach einem der Ansprüche 1 bis 7.

9. Feststelleinrichtung (3) nach Anspruch 8, **dadurch gekennzeichnet, dass** die Nockenträger (1, 2) um die Drehachse (7) gegeneinander verdrehbar auf einem Spannbolzen (13) der Feststelleinrichtung (3) angeordnet sind, wobei vorzugsweise vorgesehen ist, dass der Spannbolzen (13) die Nockenträger (1, 2) koaxial zur Drehachse (7) durchdringt.

10. Verstellbare Lenksäule (4) für ein Kraftfahrzeug mit einer Feststelleinrichtung (3) nach einem der Ansprüche 8 oder 9.

## Claims

1. Arrangement having a first cam carrier (1) and at least one further cam carrier (2) for a securing device (3) for an adjustable steering column (4) of a motor vehicle, wherein the cam carriers (1, 2) each comprise at least one cam (5, 6) and the cam carriers (1, 2) are disposed opposite one another and rotatably against one another about a rotational axis (7), and upon rotation of the first cam carrier (1) against the further cam carrier (2) along a rotation angle (8) about the rotational axis (7), the cam (5) of the first cam carrier (1) is glidingly in contact on the cam (6) of the further cam carrier (2) along a contact path (9), **characterised in that** the contact path (9) extends at a radial distance (10) from the rotational axis (7) varying as a function of the rotation angle (8).

2. Arrangement according to claim 1, **characterised in that** the cam (5) of the first cam carrier (1) and the cam (6) of the further cam carrier (2) are exclusively in the region of the contact path (9) in contact with one another.

3. Arrangement according to claim 1 or 2, **characterised in that**, viewed in a radial direction (11) with respect to the rotational axis (7), the width (12) of the contact path (9) varies as a function of the rotation angle (8).

4. Arrangement according to one of claims 1 to 3, **characterised in that** even if the cams (5, 6) are in a relieved state, the contact path (9) extends, preferably over its entire longitudinal extent, on one of the cams (5), viewed in a planar section along the rotational axis (7), parallel to the contact path (9) on the other cam (6).

5. Arrangement according to one of claims 1 to 4, **characterised in that** the contact path (9) extends, preferably over its entire longitudinal extent, on at least one of the cams (5, 6), preferably on both cams (5, 6) in contact with one another, viewed in a planar section along the rotational axis (7), orthogonally to the rotational axis (7).

6. Arrangement according to one of claims 1 to 5, **characterised in that** the cams (5, 6) on the respective cam carriers (1, 2) are configured as projections, configured such that they face one another and in a direction parallel to the rotational axis (7), of the respective cam carrier (1, 2).

7. Arrangement according to claim 6, **characterised in that** the contact path (9) is, preferably in each case, disposed on the surface of at least one of the cams (5, 6) facing the cam (5, 6) of the other cam carrier (1, 2).

8. Securing device (3) for an adjustable steering column (4) of a motor vehicle having an arrangement according to one of claims 1 to 7.

9. Securing device (3) according to claim 8, **characterised in that** the cam carriers (1, 2) are disposed on a clamp bolt (13) of the securing device (3) such that the cam carriers (1, 2) are rotatable against one another about the rotational axis (7), wherein it is preferably provided that the clamp bolt (13) penetrates through the cam carriers (1, 2) coaxially to the rotational axis (7).

10. Adjustable steering column (4) for a motor vehicle having a securing device (3) according to one of claims 8 or 9.

## Revendications

1. Ensemble comprenant un premier support de came (1) et au moins un autre support de came (2) pour un dispositif de fixation (3) d'une colonne de direction (4) réglable d'un véhicule automobile, dans lequel les supports de came (1, 2) comprennent chacun au moins une came (5, 6) et les supports de came (1, 2) sont agencés en face l'un de l'autre de manière à pouvoir tourner l'un par rapport à l'autre autour d'un axe de rotation (7) et, lors de la rotation du premier support de came (1) par rapport à l'autre support de came (2) le long d'un angle de rotation (8) autour de l'axe de rotation (7), la came (5) du premier support de came (1) s'applique contre la came (6) de l'autre support de came (2) en glissant le long d'une ligne de contact (9), **caractérisé en ce que** la ligne de contact (9) s'étend, par rapport à l'axe de rotation (7), à un écart radial (10) variant en fonction de l'angle de rotation (8).

2. Ensemble selon la revendication 1, **caractérisé en ce que** la came (5) du premier support de came (1) et la came (6) de l'autre support de came (2) ne sont en contact l'une avec l'autre que dans la zone de la ligne de contact (9).

3. Ensemble selon la revendication 1 ou 2, **caractérisé en ce que**, vu dans la direction radiale (11) par rapport à l'axe de rotation (7), la largeur (12) de la ligne de contact (9) varie en fonction de l'angle de rotation (8).

4. Ensemble selon l'une quelconque des revendications 1 à 3, **caractérisé en ce que**, même si les cames (5, 6) se situent dans un état déchargé, la ligne de contact (9), de préférence sur toute sa direction longitudinale, s'étend sur une des cames (5), vu dans une coupe plane le long de l'axe de rotation (7), parallèlement à la ligne de contact (9) sur l'autre came (6).

5. Ensemble selon l'une quelconque des revendications 1 à 4, **caractérisé en ce que** la ligne de contact (9), de préférence sur toute sa direction longitudinale, s'étend sur au moins une des cames (5, 6), de préférence sur les deux cames en contact l'une avec l'autre, vu dans une couple plane le long de l'axe de rotation (7), perpendiculairement à l'axe de rotation (7).

6. Ensemble selon l'une quelconque des revendications 1 à 5, **caractérisé en ce que** les cames (5, 6) sur les supports de came (1, 2) respectifs sont réalisées sous la forme de parties saillantes du support de came (1, 2) respectif tournées l'une vers l'autre et formées dans une direction parallèle à l'axe de rotation (7).

7. Ensemble selon la revendication 6, **caractérisé en ce que** la ligne de contact (9) est agencée, de préférence respectivement, sur la surface d'au moins une des cames (5, 6) tournée vers la came (5, 6) de l'autre support de came (1, 2).

8. Dispositif de fixation (3) pour une colonne (4) réglable d'un véhicule automobile comprenant un ensemble selon l'une quelconque des revendications 1 à 7.

9. Dispositif de fixation (3) selon la revendication 8, **caractérisé en ce que** les supports de came (1, 2) sont agencés sur un boulon de serrage (13) du dispositif de fixation (3) de manière à pouvoir tourner l'un par rapport à l'autre autour de l'axe de rotation (7), dans lequel il est prévu de préférence que le boulon de serrage (13) traverse les supports de came (1, 2) de manière coaxiale par rapport à l'axe de rotation (7).

10. Colonne de direction (4) réglable pour un véhicule automobile comprenant un dispositif de fixation (3) selon l'une quelconque des revendications 8 ou 9.
